# EUROPÄISCHE PATENTSCHRIFT

(11) **EP 2 722 091 B1**
(45) Veröffentlichungstag und Bekanntmachung des Hinweises auf die Patenterteilung: **24.08.2016**
(21) Anmeldenummer: 13188714.3
(22) Anmeldetag: 15.10.2013
(51) Int. Cl.: B01D 46/00, B01D 46/24

(54) **Filter**
Filter
Filtre

(30) Priorität: 22.10.2012 DE 102012020574
(43) Veröffentlichungstag der Anmeldung: 23.04.2014
(73) Patentinhaber: MANN + HUMMEL GMBH, 71638 Ludwigsburg (DE)
(72) Erfinder: Kaufmann, Michael, 67149 Meckenheim (DE); Ruhland, Klaus-Dieter, 67149 Meckenheim (DE)

(56) Entgegenhaltungen:
- DE-A1- 2 308 840
- GB-A- 1 185 233
- US-B1- 6 958 083

## Beschreibung

### Technisches Gebiet

Die Erfindung betrifft einen Luftilter, insbesondere für die Ansaugluft von Brennkraftmaschinen, umfassend ein hohlzylindrisches Filtergehäuse und ein Filterelement mit einem ringförmig geschlossenen, insbesondere sternförmig gefalteten Filtermedium.

### Stand der Technik

Aus DE 10 2010 010 964 A1 oder US 6,958,083 B1 sind Luftfilter bekannt, die einen tangentialen Einlassstutzen aufweisen. Die einströmende Luft tritt dort in einen ringförmigen Strömungskanal ein, der ein rundes Filterelement teilweise umgibt.

Die Erfindung hat die Aufgabe den gattungsgemäßen Filter dahingehend zu verbessern, dass der Strömungswiderstand reduziert wird und/oder die Vorabscheidung verbessert wird, ohne mehr Einbauraum als bisher zu benötigen.

### Offenbarung der Erfindung

Diese Aufgabe wird überaschender Weise durch einen Luftilter gelöst, umfassend ein hohlzylindrisches Filtergehäuse und ein Filterelement mit einem ringförmig geschlossenen, insbesondere sternförmig gefalteten Filtermedium, wobei das Filtergehäuse an einem ersten axialen Endbereich einen in der zylindrischen Außenwand angeordneten, tangentialen Einlassstutzen und eine ringförmige, koaxial in das Filtergehäuse hineinragende Strömungsleitwand aufweist, die das Filterelement umschließt, wobei ein ringförmiger Strömungsraum zwischen zylindrischer Außenwand und Strömungsleitwand gebildet ist, wobei der Einlassstutzen einen Fortsatz aufweist, der in einem Teilbereich in den ringförmigen Strömungsraum hineinragt und den ringförmigen Strömungsraum bis zur Strömungsleitwand überbrückt.

Durch den Fortsatz wird erreicht, dass sich im ringförmigen Strömungsraum eine ringförmige, in eine Spiralförm übergehende Strömung ausbildet, die gleichmäßiger ist und somit sowohl für eine verbesserte Vorabscheidung durch Fliehkraftwirkung als auch für einen geringeren Druckverlust ausschlaggebend sein kann.

Tangential bedeutet in Bezug auf den Einlassstutzen, dass dieser nicht radial in Bezug auf die Mittelachse ausgerichtet ist, sondern eine Strömungsrichtung und insbesondere eine zentrale Achse aufweist, die im Wesentlichen tangential zu einer Kreisbahn ausgerichtet ist, die konzentrisch zur Mittelachse des Filtergehäuses verläuft. Die Strömung tritt dabei in einem Eintrittsbereich aus dem Einlassstutzen in das Filtergehäuse über. Bevorzugt ist dabei, dass der Einlassstutzen im äußeren Bereich des Eintrittsbereichs in flachem Winkel und/oder im Wesentlichen tangential in die zylindrische Filtergehäusewand übergeht. Weiter bevorzugt ist, dass der Einlassstutzen materialeinheitlich oder unlösbar verbunden mit der Filtergehäusewand ausgeführt ist.

Erfindungsgemäß ist zwischen Fortsatz und Strömungsleitwand ein Durchgangsschlitz gebildet. Durch diesen wird erreicht, dass ein Teil der sich im ringförmigen Strömungskanal ausbildenden, ring- oder spiralförmigen Strömung erneut in den Eintrittsbereich des Einlassstutzens in den ringförmigen Strömungskanal eintreten kann, wodurch einerseits der Druckverlust durch Umlenkung am Fortsatz reduziert werden kann. Andererseits ist der Durchgangsschlitz bevorzugt unmittelbar an der Strömungsleitwand angeordnet und damit in dem Bereich, in welchem sich aufgrund der Fliehkraftwirkung am wenigsten Partikel befinden. Dadurch kann insbesondere die Vorabscheideleistung verbessert werden.

In einer Ausführungsform weist der Fortsatz einen ersten Bereich auf, in welchem er unmittelbar an die Strömungsleitwand angrenzt oder mit dieser materialeinheitlich verbunden ist und einen zweiten Bereich, in welchem der Fortsatz in einem Abstand von der Strömungsleitwand endet, so dass der Durchgangsschlitz gebildet ist. Dabei ist bevorzugt der erste Bereich dem axialen Endbereich des Filtergehäuses näher als der zweite Bereich, d.h. der Durchgangsschlitz ist in einem von dem axialen Endbereich abgewandten Abschnitt des Fortsatzes angeordnet. Auf diese Weise kann eine Optimierung in Bezug auf Umlenkeffekt und Druckverlust erreicht werden. Der Abstand zwischen Fortsatz und Strömungsleitwand, also die Höhe des Durchgangsschlitzes beträgt bevorzugt zwischen einem und 10 Millimetern, besonders bevorzugt zwischen einem und fünf Millimetern. Der Durchgangsschlitz kann eine konstante Höhe aufweisen oder eine mit zunehmendem Abstand vom axialen Endbereich des Gehäuses zunehmende Höhe, d.h. einen steigenden Abstand zur Strömungsleitwand, aufweisen.

In einer Ausführungsform ist der Fortsatz im Wesentlichen in der Hälfte des Einlassstutzen vorgesehen, der einen geringeren Abstand zur Mittelachse des hohlzylindrischen Filtergehäuses aufweist, und wirkt somit als Sperre oder Ablenkvorrichtung für die sich ausbildende ringförmige Strömung, wodurch die Ausbildung einer spiralförmigen Strömung unterstützt wird.

In einer Ausführungsform ist die Strömungsleitwand achsparallel zur Mittelachse des hohlzylindrischen Filtergehäuses angeordnet und/oder konzentrisch zur zylindrischen Filtergehäusewand.

In einer Ausführungsform überdeckt die Strömungsleitwand axial den Einlassstutzen, d.h. sie ragt so weit in den Innenraum des Filtergehäuses hinein, dass die durch den Einlassstutzen eintretende Strömung vollständig in den ringförmigen Strömungsraum eintritt oder auf die Strömungsleitwand trifft. Dadurch kann die Vorabscheidewirkung optimiert und/oder eine ungleichmäßige Beladung des Filterelements vermieden werden.

In einer Ausführungsform ist im Filtergehäuse im axialen Endbereich ein zentraler Auslassstutzen angeordnet, der mit einem Innenraum des Filterelementes verbunden ist.

In einer Ausführungsform ist im zweiten axialen Endbereich eine Staubaustragsöffnung zum Staubaustrag mittels einer Absaugung oder eines Staubaustragventils vorgesehen.

In einer Ausführungsform ist der ringförmige Strömungskanal axial von einem flachen, ringförmig umlaufenden Gehäusewandabschnitt begrenzt, wobei der Querschnitt des Einlassstutzens den Gehäusewandabschnitt axial, vom Innenraum des Filtergehäuses weg gerichtet, überragt. Dabei ist bevorzugt im Eintrittsbereich des Einlassstutzens ein Übergangsbereich vorgesehen, der in den ringförmig umlaufenden Gehäusewandabschnitt übergeht. Auf diese Weise kann die Einleitung einer spiralförmigen Strömung unterstützt werden, insbesondere ohne Nachteile beim Druckverlust in Kauf nehmen zu müssen.

In einer Ausführungsform weist der Einlassstutzen einen im Wesentlichen kreisförmigen oder ovalen Querschnitt auf.

In einer Ausführungsform ist der Einlassstutzen möglichst weit außen am Gehäuse angeordnet, ohne die maximale Breite des Gehäuses zu überragen. Somit kann der Durchmesser des Einlassstutzens größer als bisher gestaltet werden, so dass das Verhältnis aus dem Durchmesser des Einlassstutzens zum Durchmesser des Filterelementes möglichst groß ist. Dadurch kann der Strömungswiderstand reduziert werden, wodurch sich zusätzlich die Standzeit des Filterelementes erhöht. Da der Einlassstutzens möglichst weit außen am Gehäuse angeordnet ist, ohne die maximale Breite des Gehäuses zu überragen, kann trotz des vergrößerten Einlassstutzens und des reduzierten Strömungswiderstands der bisher für das Gehäuse erforderliche Einbauraum beibehalten werden. Durch den möglichst weit außen am Gehäuse angeordneten Einlassstutzen kann der Einlassstutzen eine deutlich größere Weite als bisher aufweisen, wodurch der Strömungswiderstand zusätzlich reduziert wird.

Der Einlassstutzen kann das mindestens eine Filterelement seiner Länge nach teilweise überdecken, so dass die Rohluft am Ende des Zuführkanals in das Filterelement eintreten kann.

Hinsichtlich einer besonders hohen Filterwirkung kann der Filter ein Primärfilterelement und ein Sekundärfilterelement aufweisen, wobei das Sekundärfilterelement bevorzugt koaxial zum und innerhalb des Primärfilterelements angeordnet ist.

In einer bevorzugten Ausführungsform kann der Filter für eine Brennkraftmaschine vorgesehen sein.

Ferner kann der Filter in einer weiteren bevorzugten Ausführungsform für einen mobilen Druckluftkompressor vorgesehen sein.

### Kurze Beschreibung der Zeichnungen

Nachfolgend wird der erfindungsgemäße Filter anhand der beiliegenden Zeichnungen näher erläutert.

Im Einzelnen zeigen:
- Fig. 1: eine quer zur Mittelachse geschnittene Ansicht auf den Luftfilter;
- Fig. 2: eine perspektivische Ansicht des Filters aus Fig. 1;
- Fig. 3: eine erste Ansicht mit einem Teilschnitt durch den Filter aus Fig. 1;
- Fig. 4: eine zweite Ansicht mit einem Teilschnitt durch den Filter aus Fig. 1.

### Ausführungsform(en) der Erfindung

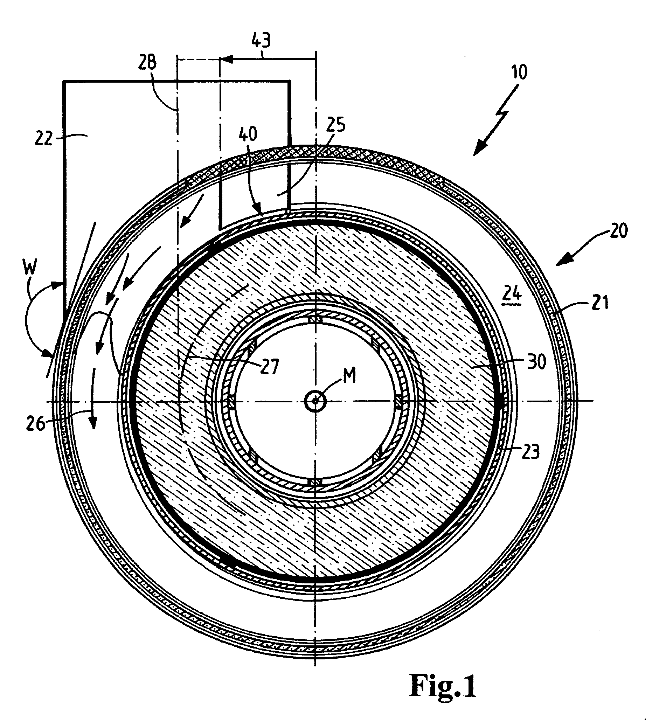

Fig. 1 zeigt einen Luftilter 10, umfassend ein hohlzylindrisches Filtergehäuse 20 und ein Filterelement 30 mit einem ringförmig geschlossenen, insbesondere sternförmig gefalteten Filtermedium, wobei das Filtergehäuse 20 an einem ersten axialen Endbereich einen in der zylindrischen Außenwand 21 angeordneten, tangentialen Einlassstutzen 22 und eine ringförmige, koaxial in das Filtergehäuse hineinragende Strömungsleitwand 23 aufweist, die das Filterelement 30 umschließt, wobei ein ringförmiger Strömungsraum 24 zwischen zylindrischer Außenwand 21 und Strömungsleitwand 23 gebildet ist, wobei der Einlassstutzen 22 einen Fortsatz 25 aufweist, der in einem Teilbereich in den ringförmigen Strömungsraum 24 hineinragt und den ringförmigen Strömungsraum bis zur Strömungsleitwand 23 überbrückt.

Durch den Fortsatz wird erreicht, dass sich im ringförmigen Strömungsraum 24 eine ringförmige, in eine Spiralform übergehende, durch Pfeile 26 schematisch dargestellte Strömung ausbildet.

Tangential bedeutet in Bezug auf den Einlassstutzen 22, dass dieser nicht radial in Bezug auf die Mittelachse ausgerichtet ist, sondern eine Strömungsrichtung und insbesondere eine zentrale Achse 28 aufweist, die im Wesentlichen tangential zu einer Kreisbahn 27 ausgerichtet ist, die konzentrisch zur Mittelachse M des Filtergehäuses 20 verläuft. Die Strömung tritt dabei in einem Eintrittsbereich aus dem Einlassstutzen 22 in das Filtergehäuse 20 über. Bevorzugt ist dabei, dass der Einlassstutzen 22 im äußeren Bereich des Eintrittsbereichs in flachem Winkel W und/oder im Wesentlichen tangential in die zylindrische Filtergehäusewand 21 übergeht. Der Einlassstutzen 22 ist materialeinheitlich mit der Filtergehäusewand aus einem Thermoplast, insbesondere mit Glasfaseranteil ausgeführt.

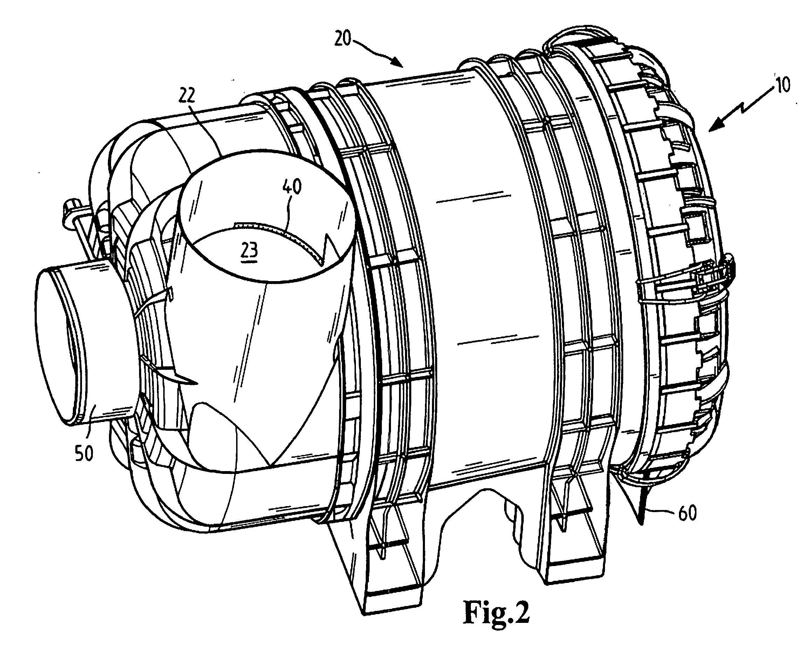

Zwischen Fortsatz 25 und Strömungsleitwand 23 ein Durchgangsschlitz 40 gebildet (in Fig. 2 gepunktet dargestellt). Durch diesen wird erreicht, dass ein Teil der sich im ringförmigen Strömungsraum 24 ausbildenden, ring- oder spiralförmigen Strömung 26 erneut in den Eintrittsbereich des Einlassstutzens 22 in den ringförmigen Strömungskanal 23 eintreten kann, wodurch einerseits der Druckverlust durch Umlenkung am Fortsatz 25 reduziert werden kann. Andererseits ist der Durchgangsschlitz 40 bevorzugt unmittelbar an der Strömungsleitwand 23 angeordnet und damit in dem Bereich, in welchem sich aufgrund der Fliehkraftwirkung am wenigsten Partikel befinden. Dadurch kann insbesondere die Vorabscheideleistung verbessert werden.

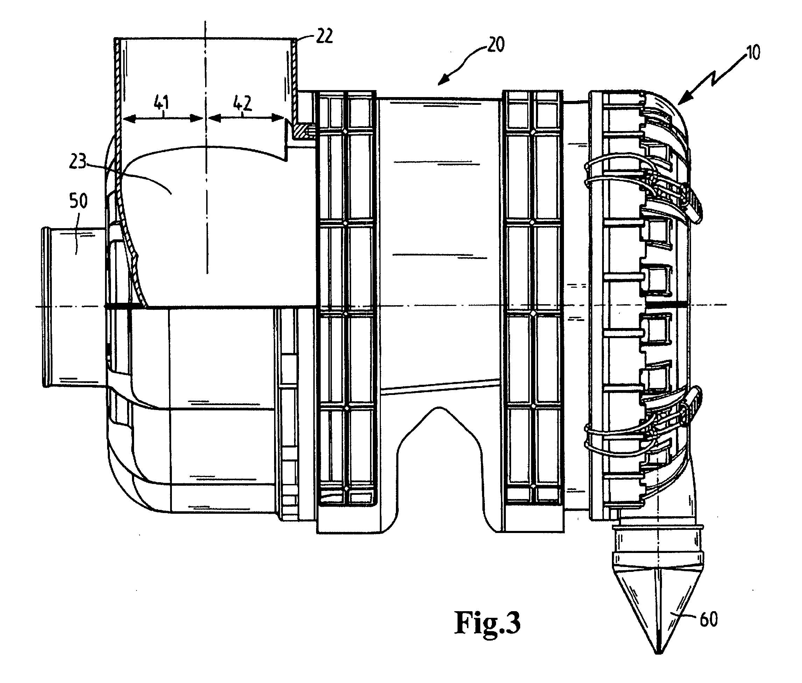

Der Fortsatz weist (s. Fig. 3) einen ersten Bereich 41 auf, in welchem er unmittelbar an die Strömungsleitwand 23 angrenzt und einen zweiten Bereich 42, in welchem der Fortsatz 25 in einem Abstand von der Strömungsleitwand 23 endet, so dass der Durchgangsschlitz 40 gebildet ist. Dabei ist der erste Bereich 41 dem axialen Endbereich des Filtergehäuses näher als der zweite Bereich 42, d.h. der Durchgangsschlitz 40 ist in einem von dem axialen Endbereich abgewandten Abschnitt des Fortsatzes 25 angeordnet. Der Abstand zwischen Fortsatz 25 und Strömungsleitwand 23, also die Höhe des Durchgangsschlitzes 40 beträgt zwischen einem und fünf Millimetern. Der Durchgangsschlitz weist eine konstante Höhe auf, es wäre jedoch auch eine mit zunehmendem Abstand vom axialen Endbereich des Gehäuses zunehmende Höhe, d.h. einen steigenden Abstand zur Strömungsleitwand, denkbar.

Der Fortsatz 25 ist im Wesentlichen in der Hälfte des Einlassstutzens 22 vorgesehen, der einen geringeren Abstand 43 (s. Fig. 1) zur Mittelachse M des hohlzylindrischen Filtergehäuses 20 aufweist, und wirkt somit als Sperre oder Ablenkvorrichtung für die sich ausbildende ringförmige Strömung 26, wodurch die Ausbildung einer spiralförmigen Strömung unterstützt wird.

Die Strömungsleitwand 23 ist achsparallel zur Mittelachse M des hohlzylindrischen Filtergehäuses 20 und zur zylindrischen Filtergehäusewand 21 angeordnet.

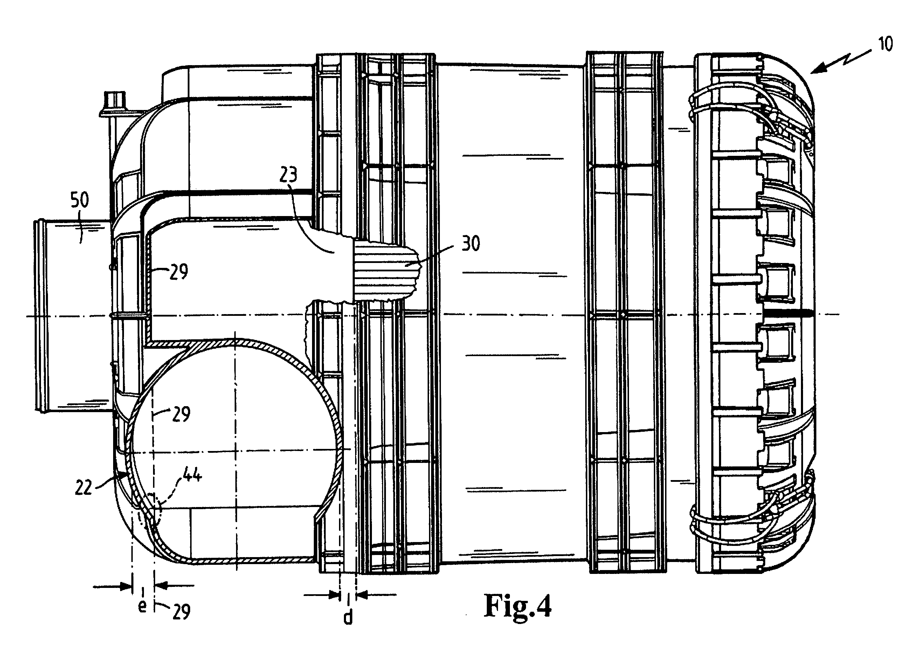

Die Strömungsleitwand 23 überdeckt axial den Einlassstutzen 22 (s. Fig. 4), d.h. sie ragt so weit in den Innenraum des Filtergehäuses hinein, dass die durch den Einlassstutzen eintretende Strömung vollständig in den ringförmigen Strömungsraum eintritt oder auf die Strömungsleitwand trifft. In der gezeigten Ausführungsform überragt die Strömungsleitwand 23 den Einlassstutzen 22 um die Distanz d.

Ferner ist im Filtergehäuse 20 im axialen Endbereich ein zentraler Auslassstutzen 50 angeordnet, der mit einem Innenraum des Filterelementes verbunden ist.

Auch ist im zweiten axialen Endbereich eine Staubaustragsöffnung zum Staubaustrag mittels eines Staubaustragventils 60 (s. Fig. 3) vorgesehen.

Der ringförmige Strömungsraum 24 ist axial von einem flachen, ringförmig umlaufenden Gehäusewandabschnitt 29 begrenzt (s. Fig. 4), wobei der Querschnitt des Einlassstutzens 22 den Gehäusewandabschnitt 29 um die Distanz e axial, vom Innenraum des Filtergehäuses weg gerichtet, überragt. Dabei ist bevorzugt im Eintrittsbereich des Einlassstutzens 22 ein Übergangsbereich 44 vorgesehen, der in den ringförmig umlaufenden Gehäusewandabschnitt übergeht. Auf diese Weise kann die Einleitung einer spiralförmigen Strömung unterstützt werden, insbesondere ohne Nachteile beim Druckverlust in Kauf nehmen zu müssen. Der Einlassstutzen 22 weist einen im Wesentlichen kreisförmigen auf.

Der Einlassstutzen ist wie in Fig. 1 und 2 ersichtlich bevorzugt möglichst weit außen am Gehäuse angeordnet, ohne die maximale Breite des Gehäuses zu überragen. Somit kann der Durchmesser des Einlassstutzens 22 größer als bisher gestaltet werden, so dass das Verhältnis aus dem Durchmesser des Einlassstutzens zum Durchmesser des Filterelementes möglichst groß ist.

## Patentansprüche

1. Luftilter (10), insbesondere für die Ansaugluft von Brennkraftmaschinen, umfassend ein hohlzylindrisches Filtergehäuse (20) und
ein Filterelement (30) mit einem ringförmig geschlossenen, insbesondere sternförmig gefalteten Filtermedium,
wobei das Filtergehäuse (20) an einem ersten axialen Endbereich einen in der zylindrischen Außenwand angeordneten, tangentialen Einlassstutzen (22) und eine ringförmige, koaxial in das Filtergehäuse (20) hineinragende Strömungsleitwand (23) aufweist, die das Filterelement (30) umschließt, wobei ein ringförmiger Strömungsraum (24) zwischen zylindrischer Außenwand und Strömungsleitwand (23) gebildet ist,
**dadurch gekennzeichnet, dass** der Einlassstutzen (22) einen Fortsatz (25) aufweist, der in den ringförmigen Strömungsraum (24) hineinragt und den ringförmigen Strömungsraum (24) bis zur Strömungsleitwand (23) überbrückt, wobei zwischen Fortsatz (25) und Strömungsleitwand (23) ein Durchgangsschlitz (40) gebildet ist.

2. Luftfilter nach Anspruch 1, wobei der Fortsatz (25) einen ersten Bereich aufweist, in welchem er unmittelbar an die Strömungsleitwand (23) angrenzt oder mit dieser materialeinheitlich verbunden ist und einen zweiten Bereich aufweist, in welchem der Fortsatz (25) in einem Abstand zwischen einem und 10 Millimetern, bevorzugt zwischen einem und fünf Millimetern von der Strömungsleitwand (23) endet, so dass der Durchgangsschlitz (40) gebildet ist.

3. Luftfilter nach einem der vorhergehenden Ansprüche, wobei der Durchgangsschlitz (40) in einem von dem axialen Endbereich abgewandten Abschnitt des Fortsatzes (25) angeordnet ist.

4. Luftfilter nach einem der vorhergehenden Ansprüche, wobei der Fortsatz (25) im Wesentlichen in der Hälfte des Einlassstutzens (22) vorgesehen ist, der einen geringeren Abstand zur Mittelachse des hohlzylindrischen Filtergehäuses (20) aufweist.

5. Luftfilter nach einem der vorhergehenden Ansprüche, wobei die Strömungsleitwand (23) achsparallel zur Mittelachse des hohlzylindrischen Filtergehäuses (20) angeordnet ist.

6. Luftfilter nach einem der vorhergehenden Ansprüche, wobei die Strömungsleitwand (23) axial den Einlassstutzen (22) überdeckt.

7. Luftfilter nach einem der vorhergehenden Ansprüche, wobei im Filtergehäuse (20) im axialen Endbereich ein zentraler Auslassstutzen angeordnet ist, der mit einem Innenraum des Filterelementes (30) verbunden ist.

8. Luftfilter nach einem der vorhergehenden Ansprüche, wobei im zweiten axialen Endbereich eine Staubaustragsöffnung zum Staubaustrag mittels einer Absaugung oder eines Staubaustragventils vorgesehen ist.

9. Luftfilter nach einem der vorhergehenden Ansprüche, wobei der ringförmige Strömungsraum (24) axial von einem flachen, ringförmig umlaufenden Gehäusewandabschnitt begrenzt ist und der Querschnitt des Einlassstutzens (22) den Gehäusewandabschnitt axial überragt.

## Claims

1. Air filter (10), in particular for the intake air of internal combustion engines, comprising a hollow-cylindrical filter housing (20) and
a filter element (30) having an annularly closed, in particular star-shaped folded filter medium,
wherein the filter housing (20) features at a first axial end portion a tangential inlet port (22) disposed in the cylindrical outer wall and an annular flow guiding wall (23) that surrounds the filter element (30) and extends coaxially into the filter housing (20), wherein an annular flow chamber (24) is formed between cylindrical outer wall and flow guiding wall (23),
**characterized in that** the inlet port (22) features an extension (25) which extends into the annular flow chamber (24) and bridges the annular flow chamber (24) up to the flow guiding wall (23), wherein a through slot (40) is formed between extension (25) and flow guiding wall (23).

2. Air filter according to claim 1, wherein the extension (25) features a first area in which it abuts directly against the flow guiding wall (23) or with which it is connected, the extension and the wall being made of the same material, and a second area in which the extension (25) ends at a distance between one and 10 millimeters, preferably between one and five millimeters from the flow guiding wall (23) so that the through slot (40) is formed.

3. Air filter according to one of the above claims, wherein the through slot (40) is disposed in a section of the extension (25) facing away from the axial end portion.

4. Air filter according to one of the above claims, wherein the extension (25) is substantially provided in the middle of the inlet port (22) which features a shorter distance to the center axis of the hollow-cylindrical filter housing (20).

5. Air filter according to one of the above claims, wherein the flow guiding wall (23) is disposed axially parallel to the center axis of the hollow-cylindrical filter housing (20).

6. Air filter according to one of the above claims, wherein the flow guiding wall (23) axially covers the inlet port (22).

7. Air filter according to one of the above claims, wherein a central outlet port, which is connected with an interior space of the filter element (30), is disposed in the axial end portion in the filter housing (20).

8. Air filter according to one of the above claims, wherein a dust discharge opening for dust discharge by means of an extraction or of a dust discharge valve is provided in the second axial end portion.

9. Air filter according to one of the above claims, wherein the annular flow chamber (24) is axially defined by a flat, annular circumferential housing wall section and the cross-section of the inlet port (22) axially protrudes the housing wall section.

## Revendications

1. Filtre à air (10), en particulier pour l'air d'aspiration de moteurs à combustion interne, comprenant un boîtier de filtre (20) en forme de cylindre creux et
un élément filtrant (30) avec un milieu filtrant de forme annulaire fermée, en particulier plié en forme d'étoile,
le boîtier de filtre (20) présentant dans une première zone d'extrémité axiale une tubulure d'entrée (22) tangentielle disposée dans la paroi extérieure cylindrique et une paroi de guidage d'écoulement (23) annulaire, s'introduisant en sens coaxial dans le boîtier de filtre (20) et entourant l'élément filtrant (30), un espace d'écoulement (24) annulaire étant formé entre la paroi extérieure cylindrique et la paroi de guidage d'écoulement (23),
**caractérisé en ce que** la tubulure d'entrée (22) est pourvue d'un prolongement (25) qui s'introduit dans l'espace d'écoulement (24) annulaire et ponte l'espace d'écoulement (24) annulaire jusqu'à la paroi de guidage d'écoulement (23), une fente de passage (40) étant réalisée entre le prolongement (25) et la paroi de guidage d'écoulement (23).

2. Filtre à air selon la revendication 1, le prolongement (25) présentant une première zone dans laquelle il est directement contigu à la paroi de guidage d'écoulement (23) ou est relié à cette paroi, le prolongement et la paroi étant exécutés dans le même matériau, et une deuxième zone dans laquelle le prolongement (25) se termine à une distance comprise entre un et 10 millimètres, de préférence entre un et cinq millimètres, de la paroi de guidage d'écoulement (23), de manière à forme la fente de passage (40).

3. Filtre à air selon l'une des revendications précédentes, la fente de passage (40) étant située dans une partie du prolongement (25) opposée à la zone d'extrémité axiale.

4. Filtre à air selon l'une des revendications précédentes, le prolongement (25) étant prévu essentiellement dans la moitié de la tubulure d'entrée (22) qui se situe à une distance réduite de l'axe médian du boîtier de filtre (20) en forme de cylindre creux.

5. Filtre à air selon l'une des revendications précédentes, la paroi de guidage d'écoulement (23) étant axialement parallèle à l'axe médian du boîtier de filtre (20) en forme de cylindre creux.

6. Filtre à air selon l'une des revendications précédentes, la paroi de guidage d'écoulement (23) recouvrant axialement la tubulure d'entrée (22).

7. Filtre à air selon l'une des revendications précédentes, une tubulure de sortie centrale étant disposée dans la zone d'extrémité axiale dans le boîtier de filtre (20) et étant reliée à un espace intérieur de l'élément filtrant (30).

8. Filtre à air selon l'une des revendications précédentes, une ouverture d'évacuation de poussière destinée à l'évacuation de poussière au moyen d'un système d'aspiration ou d'une vanne d'évacuation de poussière étant prévue dans la deuxième zone d'extrémité axiale.

9. Filtre à air selon l'une des revendications précédentes, l'espace d'écoulement (24) annulaire étant limité en sens axial par une section de la paroi de boîtier plate et annulaire et la section de la tubulure d'entrée (22) dépassant en sens axial de la section de la paroi de boîtier.
